# FASCICULE DE BREVET EUROPEEN

(11) **EP 0 822 140 B1**
(45) Date de publication et mention de la délivrance du brevet: **01.10.2003**
(21) Numéro de dépôt: 97401815.2
(22) Date de dépôt: 28.07.1997
(51) Int. Cl.: B65B 3/26

(54) **Procédé et dispositif pour la distribution d'une pluralité de doses d'un même liquide**
Verfahren und Vorrichtung zum Verteilen einer Anzahl von Dosierungen einer Flüssigkeit
Process and device for the distribution of a number of liquid doses

(30) Priorité: 29.07.1996 FR 9609522
(43) Date de publication de la demande: 04.02.1998
(73) Titulaire: L'OREAL, 75008 Paris (FR)
(72) Inventeur: Esclar, Dominique, 08360 Herpy L'Arlésienne (FR); Carmona, Pierre-Luis, 93220 Gagny (FR); Gaubert, Michel, 95190 Goussainville (FR); Sterle, Pascal, 95230 Soisy-Sous-Montmorency (FR)
(74) Mandataire: Leszczynski, André

(56) Documents cités:
- DE-A- 2 027 184

## Description

La présente invention concerne la distribution simultanée d'une pluralité de doses d'un liquide et notamment mais non exclusivement, le remplissage par un liquide de plusieurs cuves individuelles de traitement d'échantillons, dont le volume est typiquement de l'ordre de quelques cm³.

La demande de brevet allemand DE 2 027 084 décrit un appareil doseur de matière visqueuse, comportant un distributeur rotatif qui contient deux tiroirs rotatifs coaxiaux et indépendants définissant des compartiments. Chaque cycle de fonctionnement a pour effet d'éjecter de chaque compartiment une seule dose de matière, ce qui permet de remplacer deux distributeurs rotatifs par un seul.

Une solution pour distribuer simultanément plusieurs doses d'un liquide dans des cuves de traitement individuelles consiste à prévoir autant de vannes que de cuves, ces vannes étant reliées, d'une part à une source commune dudit liquide, et d'autre part à des orifices de remplissage débouchant respectivement dans lesdites cuves. La durée d'ouverture de chaque vanne permet de contrôler la quantité de liquide distribuée. Cette solution devient rapidement très coûteuse à mettre en oeuvre lorsque les cuves de traitement sont nombreuses et que plusieurs liquides de traitement ou de rinçage successifs doivent être envoyés dans les cuves, car il faut multiplier d'autant le nombre de vannes. En outre, il peut se poser un problème d'encombrement dû au nombre de vannes.

La présente invention a pour objet un dispositif permettant la distribution simultanée de plusieurs doses d'un liquide, qui soit relativement simple et peu coûteux.

L'invention y parvient par le fait que ce dispositif comporte :
- un corps de distributeur présentant un logement dans lequel débouche au moins une entrée d'amenée dudit liquide,
- une succession de chambres d'accumulation de liquide, communiquant par des orifices d'entrée et de sortie respectifs avec ledit logement et par des sorties de distribution de liquide respectives avec l'extérieur, lesdites sorties étant munies chacune de moyens d'obturation pouvant être ouverts pour la distribution du liquide,
- des canaux d'amenée d'un gaz de chasse associés respectivement auxdites chambres,
- un organe de sélection, mobile dans ledit logement entre une position de remplissage et une position de distribution,
- des moyens d'étanchéité placés dans ledit logement entre le corps du distributeur et ledit organe de sélection, ces derniers étant conformés et lesdits moyens d'étanchéité étant positionnés de
manière à, lorsque ledit organe de sélection est dans la position de remplissage, définir des passages de liquide dans ledit logement entre un orifice de sortie d'une chambre et un orifice d'entrée de la chambre suivante pour forcer la circulation du liquide depuis ladite entrée d'amenée du liquide successivement au travers des différentes chambres et, lorsque l'organe de sélection est dans la position de distribution, isoler lesdits passages et permettre, lorsque lesdits moyens d'obturation associés à chaque chambre sont ouverts, l'écoulement du liquide contenu à l'intérieur de chaque chambre par la sortie de distribution de liquide correspondante sous l'action dudit gaz de chasse.

Grâce à l'invention, le nombre de doses de liquide pouvant être distribuées dans des cuves individuelles peut facilement être étendu et de façon relativement peu coûteuse.

Dans un mode de réalisation particulier de l'invention, lesdits canaux d'amenée du gaz de chasse débouchent dans ledit logement et sont isolés par lesdits moyens d'étanchéité lorsque l'organe de sélection est dans la position de remplissage.

Dans un mode de réalisation particulier de l'invention, lesdits moyens d'étanchéité sont portés par l'organe de sélection.

Dans un mode de réalisation particulier de l'invention, l'organe de sélection présente une forme allongée et peut coulisser à l'intérieur dudit logement.

Dans un mode de réalisation particulier de l'invention, chaque canal d'amenée du gaz de chasse débouche dans ledit logement par un orifice situé le long de la trajectoire de l'organe de sélection, entre les canaux d'entrée et de sortie d'une chambre d'accumulation débouchant dans ledit logement.

Dans un mode de réalisation particulier de l'invention, chaque chambre d'accumulation communique avec ledit logement par l'intermédiaire de deux canaux parallèles débouchant dans la chambre d'accumulation à sa paroi supérieure.

Avantageusement, les passages précités permettant la circulation du liquide depuis ladite entrée d'amenée du liquide successivement à travers les différentes chambres lorsque l'organe de sélection est dans la position de remplissage, sont formés par des gorges annulaires de l'organe de sélection.

De préférence, les moyens d'obturation des chambres d'accumulation sont constitués par des clapets s'ouvrant lorsque la pression de liquide dans la chambre d'accumulation associée dépasse une valeur prédéterminée.

Dans un mode de réalisation particulier de l'invention, chaque chambre d'accumulation a un volume réglable par ajustement de la hauteur d'une pièce maintenant le clapet correspondant.

L'invention a encore pour objet un procédé pour distribuer simultanément plusieurs doses d'un liquide, caractérisé par le fait qu'il comprend les étapes consistant à :
- relier en série par des passages formés entre un corps de distributeur et un organe de sélection dans une position relative donnée par rapport au corps de distributeur une succession de chambres d'accumulation de liquide, le volume de chaque chambre correspondant à une dose prédéterminée de liquide à distribuer,
- remplir lesdites chambres par circulation de liquide entre la première et la dernière chambre, le passage d'une chambre à la suivante s'effectuant par trop-plein,
- isoler les chambres entre elles en déplaçant l'organe de sélection relativement au corps de distributeur pour fermer lesdits passages,
- envoyer dans chaque chambre un gaz de chasse pour permettre le départ du liquide contenu à l'intérieur de la chambre par une sortie de distribution de liquide associée.

D'autres caractéristiques et avantages de la présente invention ressortiront à la lecture de la description détaillée qui va suivre, d'exemples de réalisation non limitatifs de l'invention, et à l'examen du dessin annexé sur lequel :
- la figure 1 est une vue en coupe schématique d'un dispositif conforme à un exemple particulier de réalisation de l'invention,
- les figures 2 à 4 illustrent différentes phases de fonctionnement du dispositif représenté sur la figure 1, et
- la figure 5 est une vue en coupe schématique d'une variante de réalisation d'un dispositif conforme à l'invention.

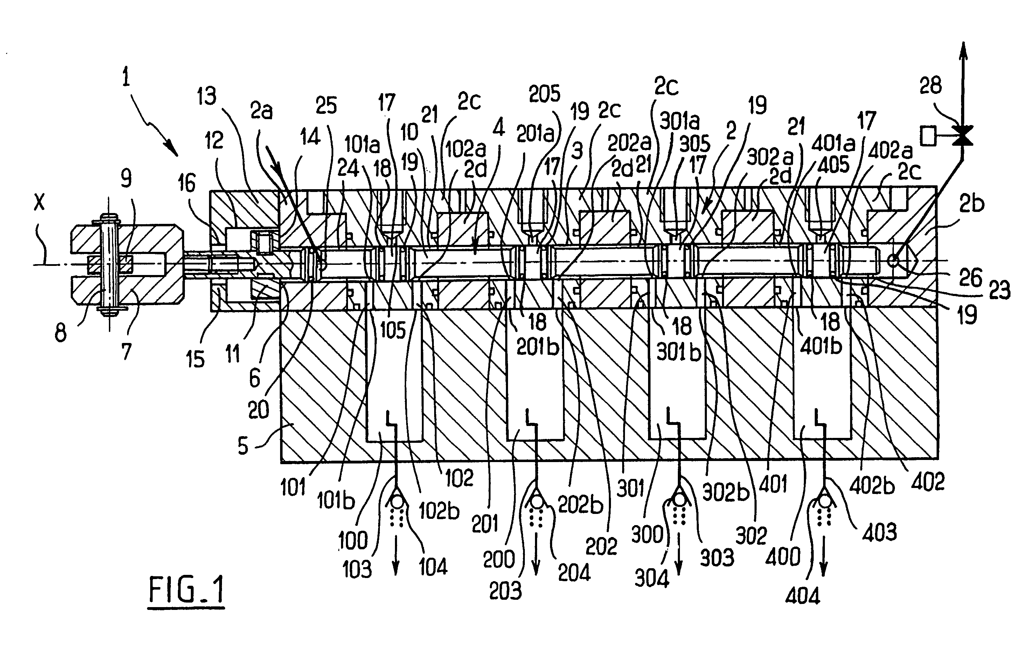

On a représenté sur la figure 1 un dispositif 1 conforme à un exemple particulier de réalisation de l'invention.

Ce dispositif 1 comporte un corps de distributeur 2 présentant un logement 3 à l'intérieur duquel peut coulisser un organe de sélection 4 de forme allongée selon un axe longitudinal X. Le logement 3 est cylindrique de révolution autour de l'axe X.

Un bloc 5 est rapporté sous le corps de distributeur 2. Une pluralité de chambres d'accumulation de liquide sont formées dans ce bloc 5. Ces chambres sont au nombre de quatre dans l'exemple décrit, et elles sont référencées respectivement 100, 200, 300 et 400.

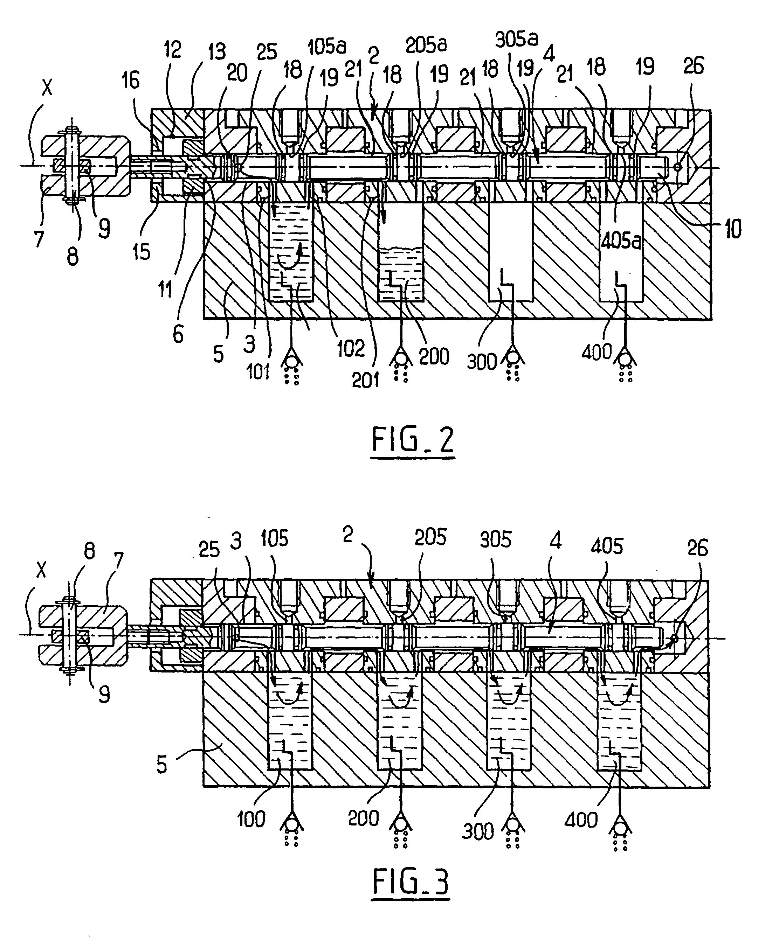

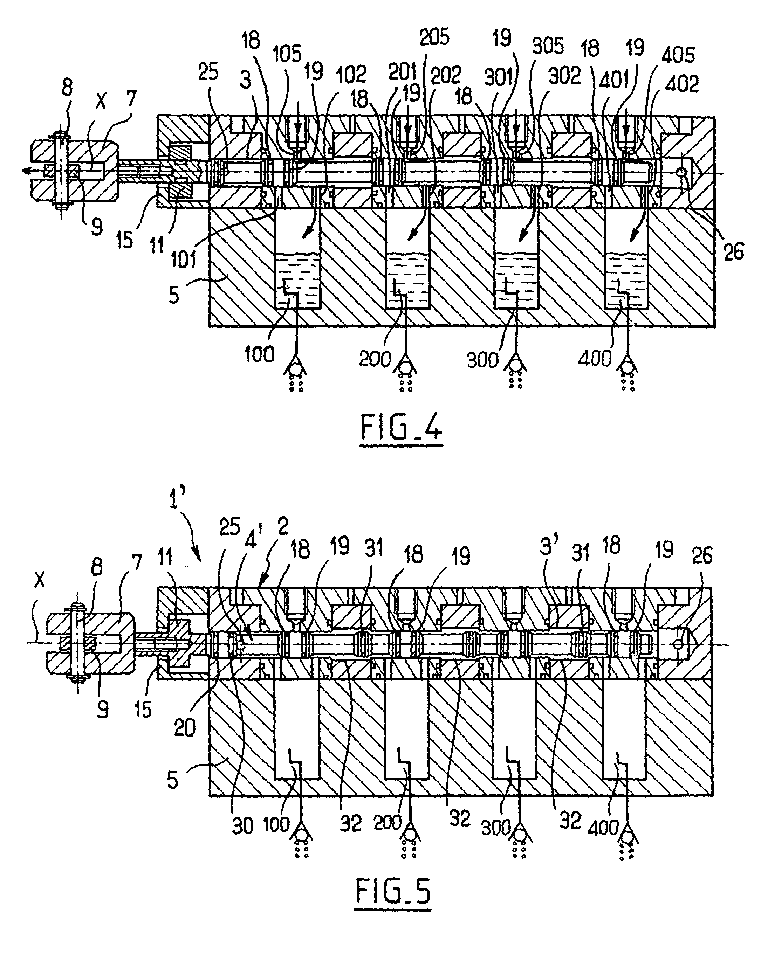

Le logement 3 est ouvert à une extrémité 6 située à gauche sur les figures et l'organe de sélection 4 sort du corps de distributeur 2 par cette extrémité. L'organe de sélection 4 comporte une tige 10 partiellement engagée dans le logement 3 et dont des portions espacées 17 de sa longueur présentent une section droite circulaire adaptée au coulissement dans le logement 3. La tige 10 est solidaire, à son extrémité située hors du logement 3, d'une fourchette 7 reliée à un bras 9 de façon articulée au moyen d'un tourillon 8. Le bras 9 peut être entraîné en rotation autour d'un axe perpendiculaire à l'axe X et parallèle au plan de coupe de la figure 1, de manière à déplacer l'organe de sélection 4 parallèlement à l'axe X entre une position de remplissage des chambres 100,200,300 et 400 correspondant aux figures 1 à 3 et une position de distribution du contenu desdites chambres, correspondant à la figure 4.

Une bague 11 est fixée sur la tige 10 à l'extérieur du logement 3 et se déplace dans un logement 12 formé en rapportant une pièce 13 contre la face 14 du corps de distributeur 2 par laquelle sort la tige 10. Un perçage 16 est réalisé dans le fond 15 de ce logement 12 pour le passage de la portion de tige 10 reliée à la fourchette 7.

Lorsque l'organe de sélection 4 est dans la position de remplissage, la bague 11 vient buter contre la face 14 et lorsque l'organe de sélection 4 est dans la position de distribution, la bague 11 vient buter contre le fond 15 du logement 12.

Chaque chambre 100,..., 400 communique avec le logement 3 par une paire de canaux 101, 102,..., 401, 402. Ces canaux 101, 102,..., 401, 402 sont constitués par des perçages du corps de distributeur 2, d'axes perpendiculaires à l'axe X et parallèles au plan de coupe de la figure 1.

Les canaux 101, 201, 301 et 401 sont appelés canaux d'entrée et les canaux 102, 202, 302 et 402 sont appelés canaux de sortie.

On a référencé 101a, 102a,..., 401a, 402a les orifices par lesquels les canaux 101, 102,..., 401, 402 débouchent respectivement dans le logement 3 et l'on a référencé 101b 102b,..., 401b, 402b les orifices par lesquels les canaux 101, 102,... 401, 402 débouchent dans les chambres 100,..., 400.

Chaque chambre 100,..., 400 communique avec une canalisation de distribution du liquide. Dans un souci de clarté du dessin, on a représenté très schématiquement les canalisations associées auxdites chambres, référencées 103,..., 403.

Chaque canalisation 103,... 403 est munie d'un clapet s'ouvrant lorsque la pression du liquide contenu dans la chambre correspondante dépasse une valeur prédéterminée. On a référencé 104,..., 404 les clapets respectivement associés aux canalisations 103,..., 403. Chaque clapet est avantageusement fixé sur une pièce non représentée qui permet par un réglage de sa position de modifier le volume interne de la chambre d'accumulation de liquide et donc et donc la quantité de liquide distribuée au travers de ce clapet. Des orifices de sortie pour la distribution de liquide sont prévus en aval des clapets 104,..., 404. Ces orifices peuvent être situés à l'extrémité de tubes plongeant dans des cuves individuelles de traitement d'échantillons.

Des canaux sont ménagés dans le corps de distributeur 2 pour permettre d'amener dans chaque chambre 100,..., 400 un gaz de chasse pour forcer le liquide contenu dans cette chambre à sortir par la canalisation de distribution associée 103,..., 403. On a respectivement référencé 105,..., 405 les canaux d'amenée du gaz de chasse. Les canaux 105,... 405 débouchent par une extrémité 105a,... 405a dans le logement 3 et à l'autre extrémité au fond d'un perçage taraudé permettant la fixation d'un embout de connexion à une canalisation raccordée à une source d'un gaz de chasse. Dans l'exemple particulier de réalisation décrit, on utilise comme gaz de chasse de l'air comprimé. On ne sort pas du cadre de l'invention en remplaçant les clapets 104, 204,...,404 par d'autres moyens d'obturation tels que des électrovannes et en remplaçant la source de gaz de chasse par une simple mise en communication avec l'air ambiant. Dans ce cas, la distribution du liquide contenu dans les chambres d'accumulation s'effectue par gravité.

On remarquera à l'examen de la figure 1 que les axes des canaux 105,... 405 sont parallèles aux axes des canaux 101, 102,... 401, 402 et pour une chambre considérée, l'axe du canal d'amenée de gaz de chasse est équidistant des canaux d'entrée et de sortie associés. Ainsi, dans le cas de la chambre 100 par exemple, l'axe du canal 105 est équidistant des axes des canaux d'entrée 101 et de sortie 102. Il en est de même pour les chambres 200, 300 et 400.

Sur chaque portion 17 de la tige 10 sont formées deux gorges annulaires dans lesquelles sont logés deux joints toriques. On a référencé 18 le joint torique situé du côté de l'extrémité 6 du logement 3 et l'on a référencé 19 le joint torique situé du côté opposé. Chaque joint torique 18 ou 19 s'interpose radialement entre la tige 10 et la paroi du logement 3.

La tige 10 présente en outre, entre la bague 11 et la portion 17 adjacente, une gorge annulaire pour recevoir un joint torique 20 s'interposant radialement entre la tige 10 et la paroi du logement 3.

La tige 10 présente, entre les portions 17, une section circulaire rétrécie de manière à ménager des interstices annulaires 21 avec la paroi du logement 3. Il en est de même, d'une part entre la portion 17 située le plus à l'opposé de l'extrémité 6 du logement 3 et l'extrémité libre 22 de la tige 10, et d'autre part, entre la gorge annulaire formée pour recevoir le joint torique 20 et la portion 17 la plus proche de l'extrémité 6 du logement 3. On ménage ainsi des interstices annulaires respectivement référencés 23 et 24.

Des orifices 25 et 26 débouchent dans le logement 3, respectivement pour amener le liquide destiné à remplir les chambres d'accumulation 100,..., 400 et pour permettre l'évacuation du liquide lorsque toutes les chambres 100,..., 400 sont remplies. L'orifice 26 débouche au fond du logement 3 et communique avec une canalisation 27 munie, dans l'exemple de réalisation décrit, d'une vanne 28.

L'orifice 25 se situe, lorsque la tige 10 est dans la position de remplissage, c'est-à-dire lorsque la bague 11 vient en appui contre la face 14, entre le joint torique 20 et le joint torique 18 de la portion 17 de la tige 10 adjacente à l'extrémité 6 du logement 3. Le joint 20 empêche donc le liquide de quitter le logement 3 par l'extrémité 6.

Chaque couple de joint torique 18, 19 associé à chaque portion 17 se situe, lorsque l'organe de sélection 4 est dans la position de remplissage, de part et d'autre d'un canal d'amenée de gaz de chasse, de manière à l'isoler. Les joints toriques 18 et 19 se situent également entre les paires de canaux 101, 102,... 401, 402 associées aux chambres 100..., 400 de manière à forcer le passage du liquide provenant de l'orifice 25 au travers successivement des chambres 100, 200,..., 400, comme cela sera précisé dans la suite.

Lorsque l'organe de sélection 4 est déplacé vers la gauche sur la figure 1 pour être amené dans la position de distribution, correspondant à la figure 4, les couples de joints toriques 18, 19 se situent respectivement de part et d'autre des canaux d'entrée 101,..., 401 pour isoler les orifices 101a,...,401a. Par ailleurs, chaque canal 105,..., 405 d'amenée du gaz de chasse débouche alors à droite d'un joint torique 19 de sorte que les orifices d'amenée du gaz de chasse 105a,... 405a ne sont plus isolés dans cette position de l'organe de sélection 4.

Le fonctionnement du dispositif 1 est le suivant.

Pour remplir les chambres 100,..., 400, l'organe de sélection 4 est amené dans la position de remplissage, c'est-à-dire déplacé complètement vers la droite comme représenté sur les figures 1 à 3, la bague 11 venant en butée contre la face 14. La source de gaz de chasse est isolée des canaux 105,... 405 par une électrovanne à l'état fermé, non représentée sur les figures. Le liquide qui débouche par l'orifice 25 s'écoule dans l'interstice annulaire 24, puis par le canal d'entrée 101 dans la première chambre d'accumulation 100, du fait de la présence du premier joint torique 18 à partir de la gauche sur la figure 1. Lorsque la chambre 100 est remplie, le liquide sort par trop-plein par le canal de sortie 102 et débouche dans le jeu annulaire 21 délimité axialement par le premier joint torique 19 et le deuxième joint torique 18. Le liquide rentre dans la deuxième chambre 200 par le canal d'entrée 201, et lorsque cette deuxième chambre est remplie, il s'écoule par trop-plein par le canal de sortie 202. Il gagne ensuite la troisième chambre par le jeu annulaire 21 délimité axialement par le deuxième joint torique 19 et le troisième joint torique 18. Lorsque cette chambre est remplie, le liquide s'écoule par trop-plein par le canal de sortie 302 pour gagner le jeu annulaire 21 ménagé entre le troisième joint torique 19 et le quatrième joint torique 18. Le liquide pénètre par le canal d'entrée 401 pour remplir la dernière chambre 400 et lorsque celle-ci est complètement remplie, le liquide s'écoule par le canal de sortie 402 pour gagner l'orifice 26 et être évacué par la canalisation 27, la vanne 28 étant ouverte. Les clapets 104, 204,... 404 sont restés fermés durant l'étape de remplissage, la pression du liquide étant inférieure à la pression à partir de laquelle les clapets s'ouvrent. Une fois le remplissage des chambres 100,... 400 achevé, l'organe de sélection 4 est déplacé vers la gauche comme représenté sur la figure 4, la bague 11 venant en butée contre le fond 15 du logement 12. La vanne qui isolait les canaux 105,... 405 d'amenée du gaz de chasse, est ouverte. La vanne 28 est fermée. Les couples de joints toriques 18, 19 n'isolent plus les orifices 105a,..., 405a, mais les canaux d'entrée 101,..., 401. L'orifice 25 se trouve isolé par le joint torique 20 et le premier joint torique 18. Dans cette position de l'organe de sélection 4, les orifices 105a,... 405a communiquent respectivement avec les canaux de sortie 102,... 402. La pression du gaz de chasse est supérieure à la pression à partir de laquelle les clapets 104,... 404 s'ouvrent, de sorte que le liquide contenu dans chaque chambre 100, 200,..., 400 est chassé au travers du clapet correspondant vers un orifice de distribution.

On a représenté sur la figure 5 une variante de réalisation 1' qui diffère principalement de l'exemple de réalisation qui vient d'être décrit par la présence de joints toriques supplémentaires. On a gardé sur cette figure les mêmes références numériques pour désigner des éléments identiques ou fonctionnellement analogues, qui ne seront pas décrits à nouveau dans le détail.

L'organe de sélection, référencé 4', porte un joint torique supplémentaire 30 entre le joint torique 20 et le premier joint torique 18. Ce joint torique 30 est situé sur l'organe de sélection 4' de telle sorte que lorsque ce dernier est dans la position de remplissage, correspondant à la figure 5, l'orifice 25 d'amenée de liquide débouche à l'intérieur du logement 3' entre le joint torique 30 et le premier joint torique 18, et lorsque l'organe de sélection 4' est dans la position de distribution, l'orifice 25 se trouve isolé entre les joints toriques 20 et 30.

L'organe de sélection 4' porte en outre trois joints toriques supplémentaires 31 situés chacun entre un joint torique 19 et le joint torique 18 suivant. Des évidements annulaires 32 sont formés dans le logement 3' de manière à ménager un espace entre chaque joint torique 31 et la paroi du logement 3' lorsque l'organe de sélection 4' est dans la positicn de remplissage. On évite ainsi que les joints 31 bloquent le passage du liquide d'une chambre vers la suivante lors du remplissage. Lorsque l'organe de sélection 4' est dans la position de remplissage, les joints toriques 31 se situent à proximité de l'extrémité droite de chacun des évidements 32. Ainsi lorsque l'organe de section 4' est déplacé vers la droite pour atteindre la position de distribution, les trois joints toriques 31 viennent s'appliquer sur la paroi du logement 3' située entre les évidements annulaires 32 et les canaux 201, 301 et 401 respectivement. La course de l'organe de sélection 4' vers la droite est choisie de sorte que les orifices 102a, 202a, 302a et 402a se trouvent isolés par chaque couple de joints toriques 18, 19 lorsque l'organe de sélection 4' est dans la position de distribution. Le passage du gaz ae chasse se fait, en ce qui concerne la chambre 100, par le jeu annulaire délimité axialement par le joint torique 30 et le premier joint torique 18, et en ce qui concerne les chambres 200,... 400 par le jeu annulaire ménagé entre un joint torique 31 et le joint torique 18 immédiatement suivant, en allant de la gauche vers la droite sur la figure 5. L'orifice 26 se trouve isolé par un joint torique 19 lorsque l'organe de sélection 4' est dans la position de distribution, de sorte qu'il n'est plus nécessaire de prévoir une électrovanne pour fermer la canalisation d'évacuation.

Finalement, l'invention permet de distribuer simultanément plusieurs doses de liquide sans nécessiter la présence de nombreuses électrovannes et convient tout particulièrement à la réalisation d'une machine de laboratoire d'encombrement compatible avec son installation sur une paillasse.

Bien entendu, l'invention n'est pas limitée aux exemples de réalisation qui viennent d'être décrits.

On peut notamment loger les joints toriques dans des gorges annulaires formées sur la paroi du logement 3.

En outre, le corps 2 est réalisé dans les exemples décrits par l'assemblage, entre deux pièces d'extrémité 2a, 2b, d'éléments modulaires 2c,2d porteurs de joints d'étanchéité 2e, 2f. Bien entendu, on ne sort pas du cadre de l'invention en modifiant la façon de réaliser le corps 2.

## Revendications

1. Dispositif (1;1') pour la distribution simultanée d'une pluralité de doses d'un liquide, **caractérisé par le fait qu'**il comporte :
- un corps de distributeur (2) présentant un logement (3;3') dans lequel débouche au moins une entrée (25) d'amenée dudit liquide,
- une succession de chambres d'accumulation de liquide (100,..., 400) communiquant par des orifices d'entrée (101,..., 401) et de sortie (102,..., 402) respectifs avec ledit logement (3;3') et par des sorties de distribution de liquide respectives avec l'extérieur, lesdites sorties étant munies chacune de moyens d'obturation (104,...,404), pouvant être ouverts pour la distribution du liquide,
- des canaux (105,..., 405) d'amenée d'un gaz de chasse associés respectivement auxdites chambres,
- un organe de sélection (4;4') mobile dans ledit logement entre une position de remplissage et une position de distribution,
- des moyens d'étanchéité (18,19,20,30,31) placés dans ledit logement entre le corps du distributeur et ledit organe de sélection, ces derniers étant conformés et lesdits moyens d'étanchéité étant positionnés de manière à, lorsque ledit organe de sélection est dans la position de remplissage, définir des passages de liquide dans ledit logement entre un orifice de sortie d'une chambre et un orifice d'entrée de la chambre suivante, pour forcer la circulation du liquide depuis ladite entrée d'amenée dudit liquide successivement au travers des différentes chambres et lorsque l'organe de sélection est dans la position de distribution, isoler lesdits passages pour permettre, lorsque lesdits moyens d'obturation associés à chaque chambre sont ouverts, l'écoulement du liquide contenu à l'intérieur de chaque chambre par la sortie de distribution de liquide correspondante sous l'action dudit gaz de chasse.

2. Dispositif selon la revendication 1, **caractérisé par le fait que** lesdits canaux (105,..., 405) d'amenée du gaz de chasse débouchent dans ledit logement et sont isolés par lesdits moyens d'étanchéité lorsque l'organe de sélection est dans la position de remplissage.

3. Dispositif selon l'une des revendications 1 et 2, **caractérisé par le fait que** lesdits moyens d'étanchéité sont portés par l'organe de sélection.

4. Dispositif selon l'une quelconque des revendications 1 à 3, **caractérisé par le fait que** ledit organe de sélection (4;4') présente une forme allongée et peut coulisser à l'intérieur dudit logement (3;3').

5. Dispositif selon l'une quelconque des revendications 1 à 4, **caractérisé par le fait que** chaque canal d'amenée du gaz de chasse débouche dans ledit logement (3;3') par un orifice (105a,...,405a) situé le long de la trajectoire de l'organe de sélection, entre les canaux d'entrée et de sortie d'une chambre d'accumulation débouchant dans ledit logement.

6. Dispositif selon l'une quelconque des revendication 1 à 5, **caractérisé par le fait que** chaque chambre d'accumulation communique avec ledit logement par l'intermédiaire de deux canaux parallèles (101,102,201,202,...,401,402) débouchant dans la chambre d'accumulation à sa paroi supérieure.

7. Dispositif selon l'une quelconque des revendications 1 à 6, **caractérisé par le fait que** lesdits passages (21) sont formés par des gorges annulaires de l'organe de sélection.

8. Dispositif selon l'une quelconque des revendications 1 à 7, **caractérisé par le fait que** lesdits moyens d'obturation sont constitués par des clapets (104,...,404) s'ouvrant lorsque la pression de liquide dans la chambre d'accumulation associée dépasse une valeur prédéterminée.

9. Dispositif selon la revendication 8, **caractérisé par le fait que** chaque chambre d'accumulation (100, ..., 400) a un volume réglable par ajustement d'une pièce maintenant le clapet (104, ..., 404) correspondant.

10. Dispositif selon l'une quelconque des revendications 1 à 9, **caractérisé par le fait qu'**une source de gaz de chasse est une source d'air comprimé.

11. Dispositif selon l'une quelconque des revendications précédentes, **caractérisé par le fait que** lesdits moyens d'étanchéité (18, 19, 20, 30, 31) définissent, lorsque ledit organe de sélection (4, 4') est dans la position de remplissage, un passage pour le liquide entre ladite entrée (25) d'amenée du liquide et un orifice d'entrée (101) de la première chambre (100) via un interstice annulaire (24).

12. Dispositif selon l'une quelconque des revendications précédentes, **caractérisé par le fait que** lesdits moyens d'étanchéité (18, 19, 20, 30, 31) définissent, lorsque ledit organe de sélection est dans la position de distribution, des passages de gaz dans ledit logement entre les canaux d'amenée (105, ..., 405) de gaz et les chambres associées par les orifices (105a, ..., 405a) communiquant respectivement avec les canaux de sorties (102, ..., 402).

13. Procédé pour distribuer simultanément plusieurs doses d'un liquide, **caractérisé par le fait qu'**il comprend les étapes consistant à :
- relier en série par des passages formés entre un corps de distributeur (2) et un organe de sélection (4) dans une position relative donnée par rapport au corps de distributeur une succession de chambres d'accumulation de liquide (100, 200, 300, 400), le volume de chaque chambre correspondant à une dose prédéterminée de produit à distribuer,
- remplir lesdites chambres par circulation de liquide entre la première et la dernière chambre, le passage d'une chambre à la suivante s'effectuant par trop-plein,
- isoler les chambres entre elles en déplaçant l'organe de sélection (4) relativement au corps de distributeur (2) pour fermer lesdits passages,
- envoyer dans chaque chambre un gaz de chasse pour permettre le départ du liquide contenu à l'intérieur de la chambre par une sortie de distribution (103, ..., 403) de liquide associée.

## Patentansprüche

1. Vorrichtung (1; 1') zur gleichzeitigen Zuteilung einer Vielzahl von Dosen einer Flüssigkeit, **dadurch gekennzeichnet, daß** sie umfaßt:
- einen Zuteilerkörper (2), der eine Aufnahme (3; 3') aufweist, in die mindestens ein Eintritt (25) zur Zufuhr der Flüssigkeit mündet,
- eine Folge von Flüssigkeitssammelkammem (100, ..., 400), die über jeweilige Eintrittsöffnungen (101, ..., 401) und Austrittsöffnungen (102,..., 402) mit der Aufnahme (3; 3') und über Flüssigkeitszuteilungsaustritte mit dem Äußeren verbunden sind, wobei diese Austritte jeweils mit Verschlußmitteln (104, ..., 404) versehen sind, die für die Zuteilung der Flüssigkeit geöffnet werden können,
- Kanäle (105, ..., 405) zur Zufuhr eines Treibgases, die diesen Kammern jeweils zugeordnet sind,
- ein Wählorgan (4; 4'), das in der Aufnahme zwischen einer Füllstellung und einer Zuteilungsstellung beweglich ist,
- Dichtungsmittel (18, 19, 20, 30, 31), die in der Aufnahme zwischen dem Körper des Zuteilers und dem Wählorgan angeordnet sind, wobei die letzteren so ausgebildet und die Dichtungsmittel so positioniert sind, daß, wenn das Wählorgan in der Füllstellung ist, Flüssigkeitsdurchgänge in der Aufnahme zwischen einer Austrittsöffnung einer Kammer und einer Eintrittsöffnung der folgenden Kammer gebildet werden, um den Umlauf der Flüssigkeit von dem Eintritt zur Zuführ der Flüssigkeit nacheinander durch die verschiedenen Kammern zu erzwingen, und, wenn das Wählorgan in der Zuteilungsstellung ist, diese Durchgärige isoliert werden, um, wenn die jeder Kammer zugeordneten Verschlußmittel offen sind, das Ablaufen der im Inneren jeder Kammer enthaltenen Flüssigkeit über den entsprechenden Flüssigkeitszuteilungsaustritt unter der Wirkung des Treibgases zu gestatten.

2. Vorrichtung nach Anspruch 1, **dadurch gekennzeichnet, daß** die Kanäle (105, ..., 405) zur Zufuhr des Treibgases in die Aufnahme münden und durch die Dichtungsmittel isoliert werden, wenn das Wählorgan in der Füllstellung ist.

3. Vorrichtung nach einem der Ansprüche 1 und 2, **dadurch gekennzeichnet, daß** die Dichtungsmittel von dem Wählorgan getragen sind.

4. Vorrichtung nach einem der Ansprüche 1 bis 3, **dadurch gekennzeichnet, daß** das Wählorgan (4; 4') eine langgestreckte Form besitzt und im Inneren der Aufnahme (3; 3') gleiten kann.

5. Vorrichtung nach einem der Ansprüche 1 bis 4, **dadurch gekennzeichnet**/daß jeder Kanal zur Zufuhr des Treibgases in die Aufnahme (3; 3') über eine Öffnung (105a, ..., 405a) mündet, die längs des Wegs des Wählorgans zwischen den in die Aufnahme mündenden Ein- und Austrittskanälen einer Sammelkammer gelegen sind.

6. Vdrrichtung nach einem der Ansprüche 1 bis 5, **dadurch gekennzeichnet, daß** die Sammelkammer mit der Aufnahme über zwei parallele Kanäle (101, 102, 201, 202,..., 401, 402) in Verbindung ist, die in die Sammelkammer in ihrer oberen Wand ausmünden.

7. Vorrichtung nach einem der Ansprüche 1 bis 6, **dadurch gekennzeichnet, daß** die Durchgänge (21) durch ringförmige Nuten des Wählorgans gebildet sind.

8. Vorrichtung nach einem der Ansprüche 1 bis 7, **dadurch gekennzeichnet, daß** die Verschlußmittel aus Ventilen (104, ..., 404) bestehen, die sich öffnen, wenn der Flüssigkeitsdruck in der zugeordneten Sammelkammer einen vorbestimmten Wert überschreitet.

9. Vorrichtung nach Anspruch 8, **dadurch gekennzeichnet, daß** jede Sammelkammer (100, ..., 400) ein Volumen besitzt, das durch Einstellung eines das entsprechende Ventil (104, ..., 404) haltenden Teils einstellbar ist.

10. Vorrichtung nach einem der Ansprüche 1 bis 9, **dadurch gekennzeichnet**, daβ eine Treibgasquelle eine Druckluftquelle ist.

11. Vorrichtung nach einem der vorhergehenden Ansprüche, **dadurch gekennzeichnet, daß** die Dichtungsmittel (18, 19, 20, 30, 31), wenn das Wählorgan (4, 4') in der Füllstellung ist, einen Durchgang für die Flüssigkeit zwischen dem Eintritt (25) zur Zufuhr der Flüssigkeit und einer Eintrittsöffnung (101) der ersten Kammer (100) über einen ringförrnigen Zwischenraum (24) bilden.

12. Vorrichtung nach einem der vorhergehenden Ansprüche, **dadurch gekennzeichnet, daß** die Dichtungsmittel (18, 19, 20, 30, 31), wenn das Wählorgan in der Zuteilungsstellung ist, Gasdurchgänge in der Aufnahme zwischen den Gaszufuhrkanälen (105, ..., 405) und den zugeordneten Kammern über die Öffnungen (105a, ..., 405a) bilden, die jeweils mif den Austrittskanälen (102,..., 402) in Verbindung sind.

13. Verfahren zur gleichzeitigen Zuteilung von mehreren Dosen einer Flüssigkeit, **dadurch gekennzeichnet, daß** es die Schritte umfaßt, die darin bestehen, daß
- über Durchgänge, die zwischen einem Zuteilerkörper (2) und einem Wählorgan (4) in einer gegebenen Relativstellung bezüglich des Zuteilerkörpers gebildet sind, eine Folge von Flüssigkeitssammelkammern (100, 200, 300, 400) in Reihe verbunden werden, wobei das Volumen jeder Kammer einer vorbestimmten zuzuteilenden Produktdosis entspricht,
- diese Kammern durch Flüssigkeitsumlauf zwischen der ersten und der letzten Kammer gefüllt werden, wobei der Übergang von einer Kammer zur folgenden durch Überlauf stattfindet,
- die Kammern voneinander isoliert werden, indem das Wählorgan (4) bezüglich des Zuteilerkörpers (2) bewegt wird, um die Durchgänge zu schließen,
- in jede Kammer ein Treibgas eingeführt wird, um den Austritt der im Inneren der Kammer enthaltenen Flüssigkeit über einen zugeordneten Flüssigkeitszuteilungsaustritt (103,..., 403) zu gestatten.

## Claims

1. Apparatus (1; 1') for simultaneously dispensing a plurality of measured quantities of a liquid, the apparatus being **characterized by** the fact that it comprises:
· a slide-valve body (2) having a housing (3; 3') into which there opens out at least one feed inlet (25) for said liquid;
· a succession of liquid accumulation chambers (100, ..., 400) communicating via respective inlet orifices (101, ..., 401) and outlet orifices (104, ..., 402) with said housing (3; 3') and via respective liquid-dispensing outlets with the outside, each of said outlets being provided with respective closure means (104, ..., 404) capable of being opened to dispense the liquid;
· respective expulsion gas feed channels (105,..., 405) associated with said chambers;
· a selector member (4; 4') movable in said housing between a filling position and a dispensing position; and
· sealing means (18, 19, 20, 30, 31) placed in said housing between the slide-valve body and said selector member, the member and the body being shaped and said sealing means being positioned in such a manner that when said selector member is in the filling position, they define passages for the liquid in said housing between the outlet orifice from each chamber and the inlet orifice to the following chamber to force the liquid to flow from said feed inlet for said liquid through the various chambers in succession, and when the selector member is in the dispensing position, to isolate said passages to make it possible, when said shutter means associated with each chamber are opened, for the liquid contained within each chamber to flow out through the corresponding liquid-dispensing outlet under the action of said expulsion gas.

2. Apparatus according to claim 1, **characterized by** the fact that said expulsion gas feed channels (105, ..., 405) open out into said housing and are isolated by said sealing means when said selector member is in the filling position.

3. Apparatus according to claim 1 or 2, **characterized by** the fact that said sealing means are carried by the selector member.

4. Apparatus according to any one of claims 1 to 3, **characterized by** the fact that said selector member (4; 4') is elongate in shape and can slide inside said housing (3; 3').

5. Apparatus according to any one of claims 1 to 4, **characterized by** the fact that each expulsion gas feed channel opens out into said housing (3; 3') via an orifice (105a, ..., 405a) situated along the path of the selector member, between the inlet and outlet channels of an accumulation chamber opening out into said housing.

6. Apparatus according to any one of claims 1 to 5, **characterized by** the fact that each accumulation chamber communicates with said housing via two parallel channels (101, 102, 201, 202, ..., 401, 402) opening out into the accumulation chamber via its top wall.

7. Apparatus according to any one of claims 1 to 6, **characterized by** the fact that said passages (21) are formed by annular grooves in the selector member.

8. Apparatus according to any one of claims 1 to 7, **characterized by** the fact that said shutter means are constituted by non-return valves (104, ..., 404) that open when the pressure of the liquid in the associated accumulation chamber exceeds a predetermined value.

9. Apparatus according to claim 8, **characterized by** the fact that leach accumulation chamber (100, ..., 400) has a volume that is adjustable by adjusting a part that holds the corresponding non-return valve (104, ..., 404).

10. Apparatus according to any one of claims 1 to 9, **characterized by** the fact that a source of expulsion gas is a source of compressed air.

11. Apparatus according to anyone of the preceding claims, **characterized by** the fact that said sealing means (18, 19, 20, 30, 31) define, when said selector member (4) is in the filling position, a passage for the liquid between said feed inlet (25) for said liquid and an inlet orifice (101) of the first chamber (100) by an annular interstice (24).

12. Apparatus according to any one of the preceding claims, **characterized by** the fact that said sealing means (18, 19, 20, 30, 31) define, when said selector member (4) is in the dispensing position, gas passages in said housing between the gas feed channels (105, ..., 405) and the corresponding chambers by the orifices (105a, ..., 405a) communicating respectively with the outlet channels (102, ..., 402).

13. A method of simultaneously dispensing a plurality of measured quantities of a liquid, the method being **characterized by** the fact that it comprises the steps consisting in:
· connecting in series via passages formed between a slide-valve body (2) and a selector member (4) in a given relative position relative to the slide-valve body, a succession of liquid accumulation chambers (100, 200, 300, 400), with the volume of each chamber corresponding to a predetermined measured quantity of the substance to be dispensed;
· filling said chambers by causing liquid to flow from the first chamber to the last chamber, with liquid passing from one chamber to the next via an overflow;
· isolating the chambers from one another by displacing the selector member (4) relative to the slide-valve body (2) to close said passages; and
· delivering an expulsion gas to each chamber to enable the liquid contained in the chamber to escape via an associated liquid-dispensing outlet (103, ..., 403).
